# EUROPÄISCHE PATENTSCHRIFT

(11) **EP 0 736 560 B1**
(45) Veröffentlichungstag und Bekanntmachung des Hinweises auf die Patenterteilung: **12.11.2003**
(21) Anmeldenummer: 96103659.7
(22) Anmeldetag: 08.03.1996
(51) Int. Cl.: C08G 63/85

(54) **Titanhaltiger Katalysator und Verfahren zur Herstellung von Polyester**
Titanium containing catalyst and process for the production of polyester
Catalyseur contenant du titane et procédé pour la production de polyester

(30) Priorität: 07.04.1995 DE 19513056
(43) Veröffentlichungstag der Anmeldung: 09.10.1996
(73) Patentinhaber: Zimmer Aktiengesellschaft, 60388 Frankfurt am Main (DE); Sachtleben Chemie GmbH, 47198 Duisburg (DE)
(72) Erfinder: Schmidt, Wolfgang, Dr., 63571 Gelnhausen (DE); Thiele, Ulrich, Dr., 64386 Bruchköbel (DE); Griebler, Wolf-Dieter, Dr., 47441 Moers (DE); Hirthe, Bernd, 47918 Tönisvorst (DE); Hirschberg, Elke, 47447 Moers (DE)

(56) Entgegenhaltungen:
- EP-A- 0 572 914
- US-A- 3 056 817
- US-A- 3 463 742
- US-A- 3 965 071

## Beschreibung

Die Erfindung betrifft einen titanhaltigen Katalysator zur Polyesterherstellung mit hoher katalytischer Aktivität, die durch das bei der Veresterung entstehende Wasser nicht beeinträchtigt wird. Des weiteren betrifft die Erfindung ein Verfahren zur Herstellung von thermisch stabilen, farblich einwandfreien Polyestern mit möglichst geringem Ethergehalt durch Veresterung oder Umesterung und nachfolgende Polykondensation in Gegenwart dieses titanhaltigen Katalysators.

Die Herstellung von Polyestern erfolgt im allgemeinen so, daß ein Diol mit einer Dicarbonsäure oder einem niederen Dicarbonsäureester, z. B. Dimethylester, umgesetzt wird. Es entsteht zunächst der entsprechende Dicarbonsäurediester, der bei ansteigenden Temperaturen unter vermindertem Druck ein- oder mehrstufig polykondensiert wird, wobei Diol und Wasser frei werden. Beide Reaktionsschritte benötigen Katalysatoren oder werden durch solche zumindest beschleunigt. Als geeignete Katalysatoren für die Veresterung werden hauptsächlich Titanverbindungen, für die Umesterung Verbindungen des Mn, Co und Zn genannt, für die Polykondensation Verbindungen des Sb, Ti, Pb, Ge, Zn und Sn, wobei als Verbindungen gemeinhin Oxide, Alkoholate, Acetate oder Carboxylate in Betracht kommen. Die Katalysatormetallmengen liegen meist zwischen 20 und 500 ppm, bezogen auf den Polyester.

Von diesen Katalysatoren sind Titanverbindungen die wirkungsvollsten und am vielseitigsten einsetzbaren, weil sie sowohl in der Veresterung oder Umesterung und in der Polykondensation eingesetzt werden können und völlig ungiftig sind. Lediglich bei Polyethylenterephthalat (PET) ist der Einsatz von Cokatalysatoren nötig, um Verfärbungen zu vermeiden. Der Einsatz des Titans erfolgt überwiegend in Form seiner Alkoholate, auch der Einsatz von Titansalzen ist beschrieben worden. Von den besonders häufig eingesetzten Titanalkoholaten ist jedoch bekannt, daß sie in der Veresterungsphase durch das dort entstehende Wasser hydrolysiert und damit katalytisch inaktiviert werden, so daß eine Katalysatornachspeisung für die Polykondensation und allgemein hohe Katalysatormengen nötig sind.

Über die katalytische Aktivität von TiO₂ gibt es keine eindeutigen Aussagen, jedoch wird allgemein davon ausgegangen, daß es weitgehend katalytisch inaktiv ist. TiO₂ wird zusätzlich zu den üblichen Katalysatoren in großen Mengen bei der PET-Faserherstellung als Mattierungsmittel und als Weißpigment, meist in der Anatasform, eingesetzt. Die üblichen Konzentrationen betragen 0,1 - - 3 % TiO₂/PET. Im US-Patent 2 906 737 wird TiO₂ in der Rutilform als Veresterungs- und Polykondensationskatalysator in Mengen von 0,01 - 5 % TiO₂ eingesetzt. Die dort genannten Veresterungszeiten von mehr als 7 h sind aber indiskutabel. Im US-Patent 3 056 817 wird ein durch Neutralisationsfällung erhaltenes Titandioxidgel aus ca. 5 % TiO₂ und 95 % Wasser in der Veresterungsphase in Mengen von 0,01 - 10 Gew.-%, bezogen auf Dicarbonsäure, eingesetzt. Die katalytische Wirkung derart hergestellter Titandioxide ist bei Polyethylenterephthalat jedoch sehr gering. Im US-Patent 3 463 742 wird frisch gefälltes Titandioxidhydrat von nicht gebundenem Wasser befreit und als Aufschlämmung in Butanol (mit 2 - 20 % Ti) für die Umesterung und die Polykondensation von Polyestern eingesetzt, wobei das Butanol später als Verunreinigung in den rückzuführenden Reaktionsbrüden enthalten ist. Nachteilig in beiden Fällen ist die Notwendigkeit, die Katalysatoren unmittelbar vor deren Einsatz frisch herstellen zu müssen, also zusätzlich zur Polyesteranlage eine Katalysatoranlage errichten zu müssen.

Der Einsatz verschiedener Titansalze, u. a. Lithium- oder Natriumtitanat, wird im US-Patent 3 965 071 beschrieben. Da ansonsten Polyester mit starken Verfärbungen und sehr hohem Diethylenglykolgehalt entstehen, muß der Titankatalysator nach der Veresterung durch Zusatz von Phosphorverbindungen vollständig desaktiviert werden, und die Polykondensation in Gegenwart von anderen Katalysatoren, wie Antimonverbindungen oder von sehr teuren Germaniumverbindungen fortgeführt werden.

Im US-Patent 4 365 054 werden Alkalititanate der Formel (Me₂O)(TiO₂)ₙ, wobei n = 0,05 - 25, bei der Polyesterherstellung sowohl als Veresterungskatalysator als auch als Polykondensationskatalysator beschrieben. Die höchste katalytische Aktivität wird bei n = 3 - 5 erreicht, der Ethergehalt des Polyesters ist aber auch hier relativ hoch, zum Beispiel 1,33 Gew.-% bei Lithiumtitanat und 2,15 Gew.-% bei Natriumtitanat. Erhalten werden die Titanate durch Zusammenschmelzen von Alkalicarbonat und TiO₂. Angaben über die Kristallitgröße oder die Partikelgröße fehlen.

Aufgabe der vorliegenden Erfindung ist daher, die bekannten titanhaltigen Katalysatoren dahingehend zu verbessern, daß die zuvor geschilderten Nachteile nicht oder zumindest in geringerem Umfang auftreten. Die Aufgabe umfaßt auch die Polyesterherstellung unter Verwendung dieser verbesserten Katalysatoren.

Die Lösung dieser Aufgabe erfolgt erfindungsgemäß durch einen titanhaltigen Katalysator und ein Verfahren gemäß den Angaben der Patentansprüche. Dieser Katalysator besteht aus einem feindispersen, oberflächenreichen, durch Hydrolyse von Titanylsulfat erhaltenen, hydratisierten TiO₂ der Zusammensetzung

y TiO₂ • Z H₂O

wobei
y = 1
z = 0,01 - 2, vorzugsweise 0,15 - 1,0
oder aus einem feindispersen, oberflächenreichen Titanat der Zusammensetzung

(MeₙO)ₓ • (TiO₂)_{y} • (H₂O)ₓ

wobei
- Me =: Li, Na, K, Rb, Cs, Mg, Ca, Sr oder Ba, vorzugsweise Na oder K
- n =: 1 für Me = Erdalkali und
- n =: 2 für Me = Alkali
- x =: 0,0001 bis 6, vorzugsweise 0,001 bis 0,5, besonders bevorzugt 0,02 bis 0,04
- y =: 1
- z =: 0,01 bis 2, vorzugsweise 0,3 bis 0,7
und wobei
oberflächenreich eine Kristallitgröße von ≤ 100 nm, vorzugsweise < 10 nm, entsprechend einer spezifischen Oberfläche von > 10 m²/g, vorzugsweise > 100 m²/g, und feindispers eine Partikel/Aggregatgröße von < 10 µm, vorzugsweise ≤ 1 µm bedeutet. Oberflächenreich kann auch bedeuten, daß die Katalysatoren röntgenamorph sind, d. h. daß die Kristallitgröße unter der Röntgenbeugungs-Bestimmungsgrenze liegt. Im folgenden wird dieser Katalysator allgemein als Titan-Katalysator bezeichnet.

Bei der Herstellung von Polyestern oder von Copolyestern durch Veresterung von mindestens einem Diol mit mindestens einer Dicarbonsäure oder durch Umesterung von mindestens einem Diol mit mindestens einem Dicarbonsäuredialkylester und nachfolgende ein- oder mehrstufige Polykondensation erfolgt die Veresterung oder Umesterung in Gegenwart einer Menge dieses Titan-Katalysators entsprechend 0 - 1000 ppm, vorzugsweise 10 - 1000 ppm, besonders bevorzugt 20 - 300 ppm Titan, bezogen auf Dicarbonsäure, und die nachfolgende Polykondensation in Gegenwart einer Gesamtmenge dieses Titan-Katalysators, entsprechend 20 - 1000 ppm, vorzugsweise 30 - 500 ppm, besonders bevorzugt 40 - 400 ppm Titan, bezogen auf Dicarbonsäure, wobei zusätzlich unmittelbar vor, während oder nach der Polykondensation dem Polykondensationsgemisch 10 - 200 ppm, vorzugsweise 20 - 100 ppm Phosphor, bezogen auf Dicarbonsäure, in Form einer Phosphor-Sauerstoff-Verbindung zugesetzt werden.

Die dem Polyester zugrundeliegenden Diole sind Alkandiole oder Cycloalkandiole mit 2 - 12 C-Atomen, insbesondere Ethylenglykol, 1,3-Propandiol, 1,4-Butandiol, 1,4-Cyclohexandimethanol oder Gemische hiervon, und die Dicarbonsäuren Aryldicarbonsäuren oder Cycloalkyldicarbonsäuren, wie Terephthalsäure, Isophthalsäure, Naphthalindicarbonsäure, 4,4'-Biphenyldicarbonsäure, 1,4-Cyclohexandicarbonsäure oder Gemische hiervon. Terephthalsäure wird als Hauptkomponente bevorzugt.

Die Herstellung des Polyesters erfolgt unter üblichen Temperatur- und Druckbedingungen und unter Verwendung üblicher Reaktoren. Zusätzlich zu dem erfindungsgemäßen Titan-Katalysator können dem Reaktionsgemisch übliche Zusätze, wie Kettenverzweigungsmittel, Mattierungsmittel, Farbstoffe usw. zugesetzt werden.

Überraschenderweise führte der vorliegende Titan-Katalysator bei gleicher bis höherer katalytischer Aktivität zu Polyethylenterephthalat mit gegenüber dem des US-Patentes 4 365 054 niedrigerem Ethergehalt und deutlich verminderter COOH-Endgruppenkonzentration, beides Eigenschaften, die für die thermische Stabilität und Verarbeitbarkeit des Polyesters von Bedeutung sind. Die Zugabe des Titan-Katalysators erfolgt vor oder zu Beginn der Veresterung oder Umesterung, wobei eine weitere Katalysatormenge, entsprechend 10 - 250 ppm, vorzugsweise 30 - 100 ppm Titan, bezogen auf Dicarbonsäure, vor oder zu Beginn der Polykondensation zugesetzt werden kann, aber nicht zugesetzt werden muß. Bei Polyestern, wie Polyethylenterephthalat, deren Veresterung auch ohne Katalysator abläuft, kann die gesamte Menge auch unmittelbar vor oder zu Beginn der Polykondensation zugesetzt werden. Weitere, andere Katalysatoren werden in keinem Fall benötigt.

Der Zusatz einer Phosphor-Sauerstoff-Verbindung, wie Phosphorsäure, Ester der Phosphorsäure oder der phosphorigen Säure, Phosphonate oder Phosphonite, erfolgt zu einem beliebigen Zeitpunkt nach Abschluß der Veresterung. Dieser Zusatz hat nur einen vernachlässigbaren, geringen Einfluß auf die katalytische Aktivität des Titan-Katalysators, wirkt sich aber positiv auf die oxidative und thermo-oxidative Stabilität und die Farbe des Polyesters aus.

Die gegenüber dem eingangs geschilderten Stand der Technik verbesserte katalytische Wirkung des erfindungsgemäßen Katalysators bei deutlich verminderten Nebenreaktionen dürfte primär auf dessen äußerst feindisperse und oberflächenreiche Struktur beruhen. Eine gewisse Bedeutung haben aber auch der Wassergehalt und der Zusatz einer Phosphorverbindung während der Polyester-Herstellung. Hierbei ist es gleichgültig, ob der Titan-Katalysator als feines Pulver oder als Suspension in dem dem Polyester zugrundeliegenden Diol den Reaktanten zugesetzt wird. Die Titan-Katalysatorsuspension kann, insbesondere nach einer längeren Lagerung, vor ihrer Verwendung mittels einer Mühle, z. B. einer Perlmühle, nochmals feinst dispergiert werden.

Titan-Verbindungen mit dieser chemischen Zusammensetzung sind an sich bekannt. Neu und unerwartet ist jedoch deren ausgezeichnete katalytische Wirkung bei der Polyester-Synthese. Diese dürfte auf die einzigartige Kristallitstruktur des vorliegenden Titan-Katalysators zurückzuführen sein, die ihrerseits auf die Hydrolyse von TiO(SO₄) ausschließlich mit Wasser zurückzuführen ist. Die Hydrolyse anderer Titan-Verbindungen mit Wasser oder alkalischer Lösung führt zu Titan-Verbindungen, die eine ähnliche chemische Zusammensetzung haben können, die aber eine andere Kristallitstruktur aufweisen und daher als Polyester-Katalysator ungeeignet oder weniger geeignet sind.

Die Herstellung dieser als Katalysator bei der Polyester-Synthese so hervorragend geeigneten Titan-Verbindungen erfolgt durch Hydrolyse, vorzugsweise thermische Hydrolyse von Titanylsulfat (TiOSO₄) und nachfolgend je nach gewünschtem Alkali- oder Erdalkaligehalt entweder
a) Entfernen überschüssiger Säure durch Wäsche oder Neutralisation und Wäsche, und gegebenenfalls Trocknung oder
b) Umsetzung bei Raumtemperatur oder bei erhöhter Temperatur bis Siedetemperatur mit Alkali- oder Erdalkalihydroxid, Wäsche und gegebenenfalls Trocknung oder
c) Umsetzung bei Raumtemperatur oder bei erhöhter Temperatur bis Siedetemperatur mit Alkali- oder Erdalkalihydroxid, Wäsche, partielle Umsetzung mit Mineralsäure oder Carbonsäure, vorzugsweise Schwefelsäure, erneute Wäsche und gegebenenfalls Trocknung.

So wird beispielsweise katalytisch aktives hydratisiertes TiO₂ mit extrem niedrigem Na-Gehalt durch thermische Hydrolyse einer Titanylsulfat-Lösung (entsprechend 200 g TiO₂/l) mit Wasser bei 105 °C, nachfolgende Wäsche bis zu einem Restschwefelsäure-Gehalt von 7 %, Einstellen der Suspension auf einen TiO₂-Gehalt von 330 g/l und Neutralisation der Suspension mit 50%iger Natronlauge unter Rühren bis zur pH-Konstanz, Wäsche bis zu einer Leitfähigkeit der Suspension < 300 µS/cm und abschließende Trocknung erhalten.

Katalytisch aktives Natriumtitanat mit hohem Na-Gehalt entsteht, zum Beispiel, wenn die durch Hydrolyse, wie zuvor beschrieben erhaltene Suspension mit einem Restschwefelsäure-Gehalt von 7 % in einem Volumenverhältnis 250 Teile Suspension mit 320 g TiO₂/l mit 200 Teilen 50%ige Natronlauge und 200 Teilen Wasser gemischt wird, die Mischung zum Sieden erhitzt und 2 h am Sieden gehalten, und das gebildete Natriumtitanat bis zu einem Rest-NaOH-Gehalt von < 3 g/l in Waschwasser gewaschen und getrocknet wird.

Katalytisch aktives Natriumtitanat mit intermediärem Na-Gehalt bildet sich beispielsweise, wenn das zuvor beschriebene Titanat mit hohem Na-Gehalt vor der Trocknung bei einem Feststoffgehalt der Suspension von 10 % mit 30%iger Schwefelsäure auf einen pH-Wert von 3 eingestellt und nach einer Standzeit von 30 min nochmals auf pH 3 nachgestellt wird. Die säurebehandelte Suspension wird bis zu einer Leitfähigkeit von < 1000 µS/cm im Filtrat gewaschen und anschließend getrocknet.

Die Lagerfähigkeit dieser Titan-Katalysatoren ist ausgezeichnet, wobei die katalytische Wirkung bei der Polyester-Synthese von der Lagerdauer unabhängig ist.

Die in den nachfolgenden Beispielen angegebenen Intrinsic Viskositäten wurden an einer Lösung von 0,5 g Polyester in 100 ml eines Gemisches aus Phenol und 1,2-Dichlorbenzol (3 : 2 Gew.-Teile) bei 25 °C bestimmt. Der Diethylenglykolgehalt wurde gaschromatographisch im bei 200 °C im Bombenrohr erhaltenen Umesterungsgemisch von 1 g Polyester mit 30 ml

Methanol und 50 mg/l Zinkacetat ermittelt. Die COOH-Endgruppenkonzentration wurde durch photometrische Titration mit 0,05 n ethanolischer Kalilauge gegen Bromthymolblau einer Lösung des Polyesters in einem Gemisch aus o-Kresol und Chloroform (70 : 30 Gew.-Teile) bestimmt.

### Beispiele 1 bis 5:

Die Veresterung von Terephthalsäure (TPA) und die Umesterung von Dimethylterephthalat (DMT) mit verschiedenen Diolen erfolgte in an sich bekannter Weise bei Normaldruck, im Beispiel 1a ohne Katalysator, im Beispiel 4a zum Vergleich mit Titantetrabutylat als Katalysator und in den sonstigen Beispielen in Gegenwart unterschiedlicher Mengen eines erfindungsgemäßen Natriumtitanatpulvers mit ca. 2 Gew.-% Natrium und ca. 6 Gew.% Wasser, einer Partikelgröße von ca. 2 µm und einer spezifischen Oberfläche von ca. 300 m²/g. Die Ergebnisse sind in Tabelle 1 zusammengestellt.

Während die auch ohne Katalysator ablaufende Veresterung von TPA mit Ethylenglykol durch die Anwesenheit von 210 ppm des Titan-Katalysators nicht nennenswert beeinflußt wird (Beispiel 1a/1b), werden die in jedem Fall einen Katalysator erfordernde Veresterung mit 1,3-Propandiol, 1,4-Butandiol oder 1,4-Cyclohexandimethanol und die Umesterung von DMT bereits durch geringe Mengen des erfindungsgemäßen Titan-Katalysators ausgezeichnet beschleunigt. Im Vergleich mit einem herkömmlichen Katalysator, namentlich Titantetrabutylat, wird bei gleicher Ti/TPA-Menge der gleiche Umsetzungsgrad bereits nach einer um etwa 20 % kürzeren Verweilzeit erzielt (Beispiel 4a/4b).

### Beispiele 6 bis 15:

Um den Einfluß des erfindungsgemäßen Titan-Katalysators auf die Polykondensation zu zeigen, wurde von unter flüssigem Stickstoff gemahlenem, ohne Katalysator hergestellten Terephthalsäure-Ethylenglykol-Veresterungsprodukt mit einem Umsetzungsgrad von etwa 98 % und einem Diethylenglykolgehalt (DEG) von etwa 1,0 Gew.-% ausgegangen. Je 42,5 Gew.-Teile dieses Produktes wurden unter Stickstoffbeschleierung, zusammen mit je einem erfindungsgemäßen Titan-Katalysator, entsprechend 105 ppm Titan/TPA, bzw. Vergleichsbeispiel 6 mit Antimontriacetat-Katalysator aufgeschmolzen. Sobald das Produkt geschmolzen war, wurde, mit Ausnahme von Beispiel 6 und 13 - 15, Triphenylphosphat, entsprechend 76 ppm Phosphor/TPA, zugegeben und die Vorkondensation bei etwa 270 °C und stufenweise vermindertem Druck (200 und 50 mbar) eingeleitet. Nach einer Verweilzeit von 60 - 70 min wurde der Druck auf < 1 mbar gesenkt und bei 275 - 285 °C während 180 min polykondensiert. Die Ergebnisse sind in Tabelle 2 zusammengestellt.

Wie ersichtlich, ist die katalytische Wirkung der Katalysatoren der Beispiele 7 - 9 und 12 der des üblicherweise verwendeten Antimon-Katalysators deutlich überlegen: bei gleicher Verweilzeit führen die erfindungsgemäßen Titan-Katalysatoren bei Polyethylenterephthalat zu einer wesentlich höheren Intrinsic Viskosität, bei ansonsten gleicher Qualität. Ein Vergleich von Beispiel 12 und 13 zeigt, daß die zugesetzte Phosphorverbindung bei gleicher Verweilzeit die Intrinsic Viskosität des Polyesters zwar vermindert, aber gleichzeitig auch die erwünschte neutral-weiße Farbe des Polyesters und eine Senkung der COOH-Endgruppenkonzentration und des Diethylenglykolgehaltes sichert. Bei den Katalysatoren der Beispiele 10 und 11 sollte, zur besseren Entfaltung der katalytischen Wirkung, aber eine etwas geringere Phosphor-Stabilisator-Menge eingesetzt werden.

### Beispiel 16:

299 Gew.-Teile Terephthalsäure werden mit 191,8 Gew.-Teilen 1,3-Propandiol in Gegenwart des in den Beispielen 1 - 5 verwendeten Natriumtitanatpulvers (entsprechend 150 ppm Ti/TPA) bei 230 °C unter Normaldruck verestert. Nach der Veresterung wird der gleiche Katalysator in einer Menge nachgespeist, die 130 ppm Ti/TPA entspricht, und eine Vorkondensation bei 240 - 260 °C unter stufenweise vermindertem Druck (200 und 100 mbar) durchgeführt. Nach einer Verweilzeit von 60 - 80 min wird bei 265 °C unter einem Druck < 1 mbar 120 min polykondensiert. Gegen Ende der Polykondensation werden 10 ppm P/TPA als Triphenylphosphat zugesetzt. Das so erhaltene Polypropylenterephthalat hat eine Intrinsic Viskosität von 0,801 dl/g und eine COOH-Endgruppenkonzentration von 23 meq/kg, wobei dessen neutral-weiße Farbe der Farbe von mit herkömmlichen Katalysatoren hergestelltem Polypropylenterephthalat eindeutig überlegen ist.

### Beispiel 17:

249,2 Gew.-Teile Terephthalsäure und 259,6 Gew.-Teile 1,4-Cyclohexandimethanol werden in Gegenwart des in den Beispielen 1 - 5 verwendeten Natriumtitanatpulvers bei etwa 220 °C verestert. Die Katalysatormenge entspricht 47 ppm Ti/TPA. Nach der Veresterung wird der gleiche Katalysator in einer Menge entsprechend 140 ppm Ti/TPA nachgespeist und bei etwa bei 220 °C unter vermindertem Druck (100 mbar) 60 min vorkondensiert. Die anschließende Polykondensation wird bei 300 °C unter einem Druck < 1 mbar in 75 min durchgeführt. Gegen Ende der Polykondensation werden 10 ppm P/TPA als Triphenylphosphat zugesetzt. Das so erhaltene Poly(cyclohexandimethylen)terephthalat hat eine Intrinsic Viskosität von 0,546 dl/g und eine COOH-Endgruppenkonzentration von 46 meq/kg.

### Beispiel 18:

291,3 Gew.-Teile Dimethylterephthalat werden mit 270,4 Gew.-Teilen 1,4-Butandiol bei 220 °C umgeestert. Als Katalysator wird das in den Beispielen 1 - 5 verwendete Natriumtitanatpulver in einer Menge eingesetzt, die 78 ppm Ti/TPA entspricht. Nach der Umesterung wird dieselbe Katalysatormenge nachgespeist und bei 235 °C unter stufenweise vermindertem Druck (100 und 50 mbar) 110 min vorkondensiert. Die Polykondensation wird bei 250 °C unter einem Druck < 1 mbar in 75 min durchgeführt. Gegen Ende der Polykondensation werden 10 ppm P/TPA als Triphenylphosphat zugesetzt. Das so erhaltene Polybutylenterephthalat hat eine Intrinsic Viskosität von 0,903 dl/g und eine COOH-Endgruppenkonzentration von 20 meq/kg.

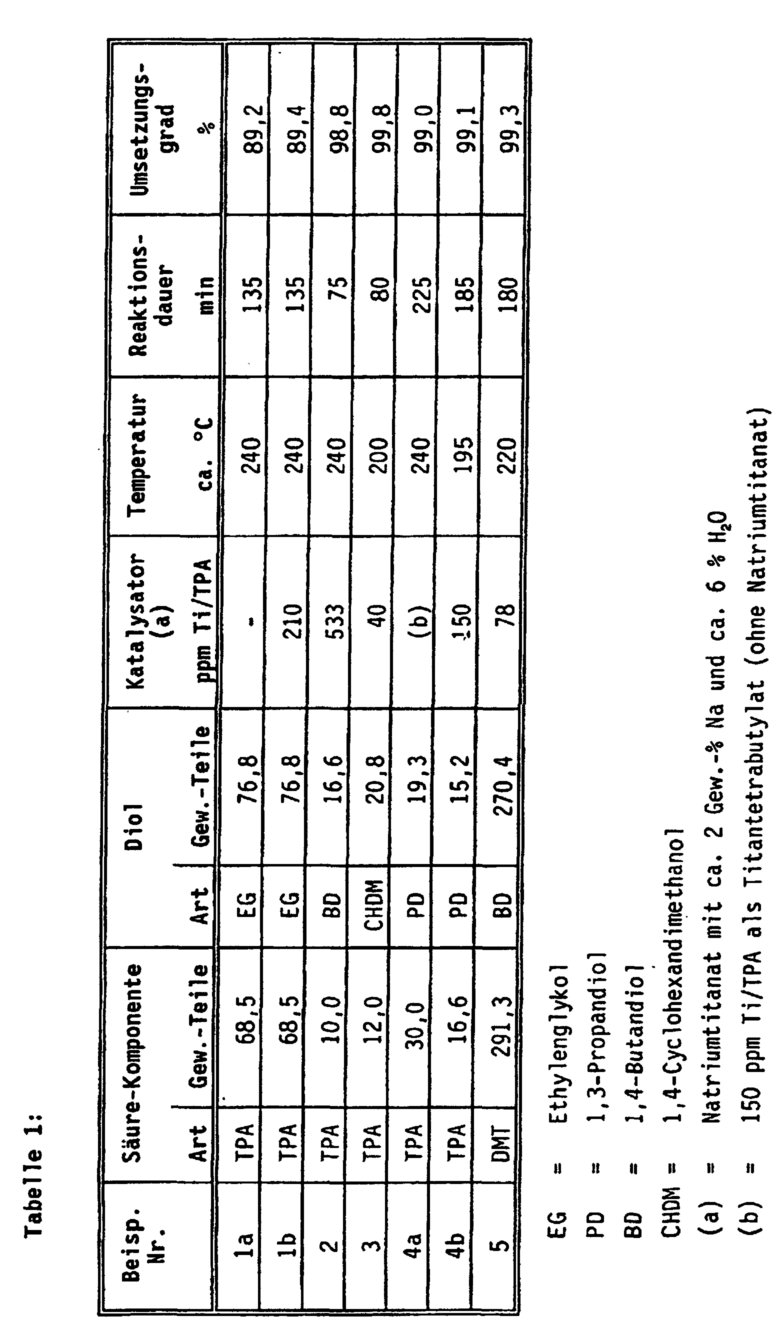

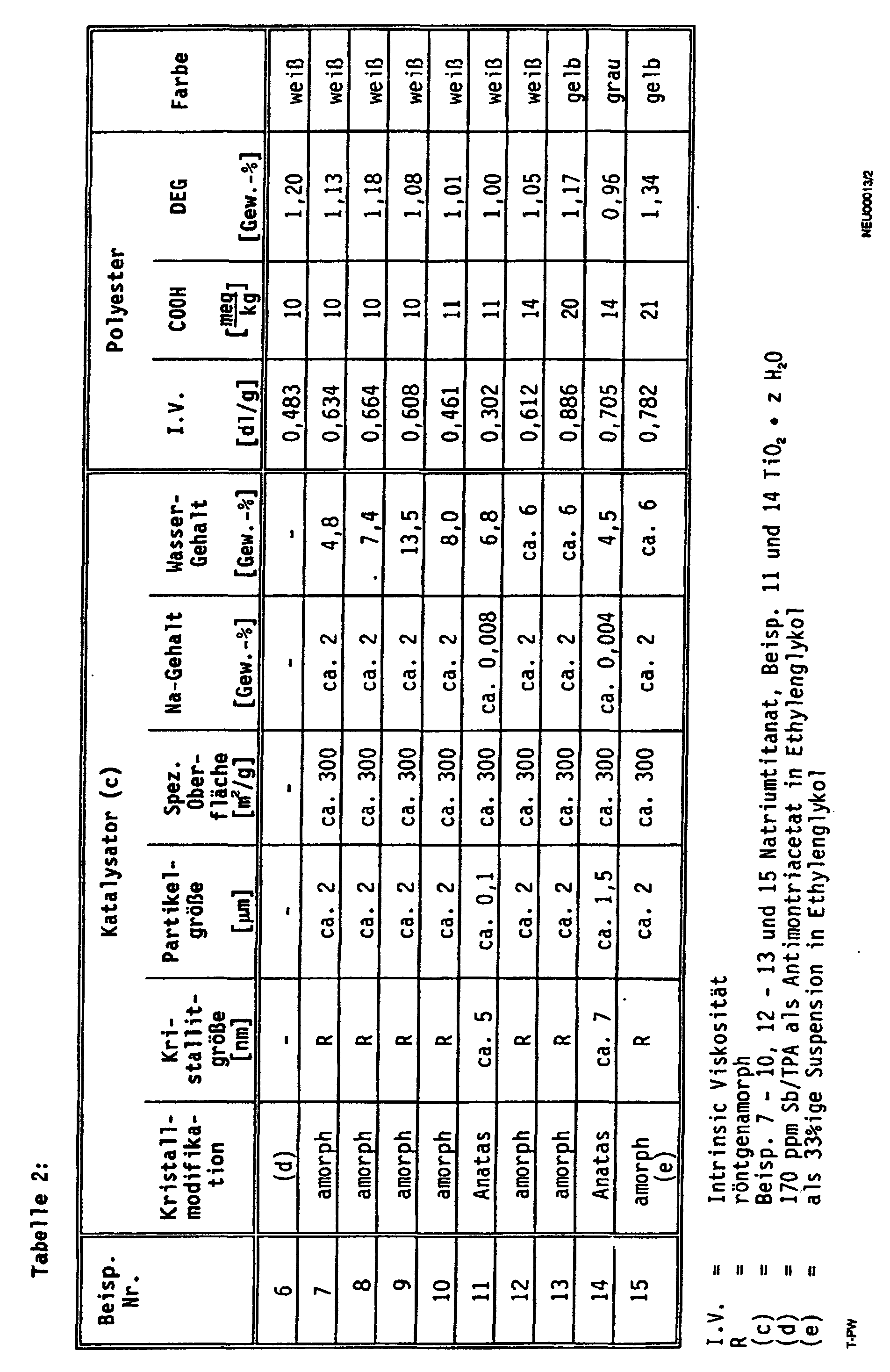

## Patentansprüche

1. Titanhaltiger Katalysator zur Herstellung von Polyestern, **dadurch gekennzeichnet, dass** er aus einem feindispersen, oberflächenreichen, durch Hydrolyse von Titanylsulfat erhaltenen, hydratisierten TiO₂ der Zusammensetzung
y TiO₂• z H₂O
wobei
y = 1
z = 0.01 - 2
oder aus einem feindispersen, oberflächenreichen Titanat der Zusammensetzung
(MeₙO)ₓ • (TiQ)_{y} • (H₂O)_{z}
wobei
Me = Li, Na, K, Rb, Cs, Mg, Ca, Sr oder Ba
n = 1 für Me = Erdalkali und
n = 2 für Me = Alkali
x = 0,0001 bis 6
y = 1
z = 0,01 bis 2
besteht, und wobei
oberflächenreich eine Kristallitgröße von ≤ 100 mm und eine spezifische Oberfläche von > 10 m²/g,
und feindispers eine Partikel/Aggregatgröße von < 10µm bedeutet

2. Katalysator gemäß Anspruch 1, **dadurch gekennzeichnet, dass** die Kristallitgröße < 10 nm, die spezifische Oberfläche > 100 m²/g und die Partikel/Aggregatgröße ≤ 1 µm beträgt.

3. Katalysator gemäß Anspruch 1 oder 2, **dadurch gekennzeichnet, dass** die Kristallitgröße unter der Röntgenbeugungs-Bestimmungsgrenze liegt.

4. Katalysator gemäß einem der Ansprüche 1 bis 3, **dadurch gekennzeichnet, dass** er durch Hydrolyse von Titanylsulfat und wahlweise Entfernen überschüssiger Säure durch Neutralisation und/oder Waschen oder Behandlung mit Alkali- oder Erdalkalihydroxid bei Raumtemperatur bis Siedetemperatur und Wäsche, gegebenenfalls partielle Umsetzung mit einer Mineralsäure oder Carbonsäure und erneute Wäsche und gegebenenfalls Trocknung erhalten wird.

5. Katalysator gemäß Anspruch 4, **dadurch gekennzeichnet, dass** die Hydrolyse des Titanylsulfates eine thermische Hydrolyse ausschließlich mit Wasser ist.

6. Verfahren zur Herstellung von Polyestem oder von Copolyestern durch Veresterung von mindestens einem Diol mit mindestens einer Dicarbonsäure oder durch Umesterung von mindestens einem Diol mit mindestens einem Dicarbonsäuredialkylester und nachfolgende ein- oder mehrstufige Polykondensation, **dadurch gekennzeichnet, dass** die Veresterung oder Umesterung in Gegenwart des Katalysators gemäß Anspruch 1 in einer 0 - 1000 ppm Titan entsprechenden Menge, bezogen auf Dicarbonsäure, erfolgt, und die Polykondensation in Gegenwart des Katalysators gemäß Anspruch 1 in einer 20 - 1000 ppm Titan entsprechenden Gesamtmenge, bezogen auf Dicarbonsäure, erfolgt, und dass unmittelbar vor, während oder nach der Polykondensation eine Phosphor-Sauerstoff-Verbindung in einer 10 - 200 ppm Phosphor entsprechenden Menge, bezogen auf Dicarbonsäure, zugesetzt wird.

7. Verfahren gemäß Anspruch 6, **dadurch gekennzeichnet, dass** der Katalysator gemäß Anspruch 1 ausschließlich vor oder zu Beginn der Veresterung oder Umesterung zugesetzt wird.

8. Verfahren gemäß Anspruch 6, **dadurch gekennzeichnet, dass** der Katalysator gemäß Anspruch 1 vor oder zu Beginn der Veresterung oder Umesterung zugegeben wird, wobei eine weitere Katalysatormenge von 10 - 250 ppm Titan, bezogen auf Dicarbonsäure, unmittelbar vor oder zu Beginn der Polykondensation zugesetzt wird.

9. Verfahren gemäß Anspruch 6. **dadurch gekennzeichnet, dass** der Katalysator gemäß Anspruch 1 ausschließlich unmittelbar vor oder zu Beginn der Polykondensation zugesetzt wird.

10. Verfahren gemäß Anspruch 7 oder 8, **dadurch gekennzeichnet, dass** die Veresterung oder Umesterung in Gegenwart einer 20 - 300 ppm Titan entsprechenden Menge des Katalysators gemäß Anspruch 1, bezogen auf Dicarbonsäure, erfolgt.

11. Verfahren gemäß einem der Ansprüche 6 bis 10, **dadurch gekennzeichnet, dass** der Katalysator gemäß Anspruch 1 als Pulver oder als Suspension in dem dem Polyester zugrunde liegenden Diol dem Polyester-Herstellungsprozeß zugesetzt wird.

## Claims

1. A titanium-containing catalyst for the manufacture of polyesters,
**characterised in that** it consists of a finely dispersed, surface-rich, hydrated TiO₂ obtained by hydrolysis from titanyl sulphate and having the following composition:
y TiO₂ • z H₂O
in which
Y = 1
z = 0.01 - 2
or of a finely dispersed, surface-rich titanate having the composition
(MeₙO)ₓ • (TiQ)_{y} • (H₂O)_{z}
in which
Me = Li, Na, K, Rb, Cs, Mg, Ca, Sr or Ba
n = 1 for Me = earth alkali and
n = 2 for Me = alkali
x = 0.0001 to 6
y = 1
z = 0.01 to 2,
and wherein surface-rich means a crystallite size of ≤ 100 mm and a specific surface of > 10 m²/gl,
and finely dispersed means a particle/aggregate size of < 10 µm.

2. A catalyst according to Claim 1,
**characterised in that** the crystallite size is < 10 nm, the specific surface is > 100 m²/g and the particle/aggregate size is ≤ 1 µm.

3. A catalyst according to Claim 1 or 2,
**characterised in that** the crystallite size lies beneath the X-ray diffraction limit of determination.

4. A catalyst according to one of Claims 1 to 3,
**characterised in that** it is obtained by hydrolysis of titanyl sulphate and optionally removal of excess acid by neutralisation and/or washing or treating with alkali or earth alkali hydroxide at ambient temperature to boiling temperature and washing, where appropriate partial reaction with a mineral acid or carboxylic acid and repeated washing and where appropriate drying.

5. A catalyst according to Claim 4,
**characterised in that** the hydrolysis of the titanyl sulphate is a thermal hydrolysis exclusively with water.

6. A process for the manufacture of polyesters or of copolyesters by esterification of at least one diol with at least one dicarboxylic acid or by transesterification of at least one diol with at least one dicarboxylic acid dialkylester and subsequent single-stage or multi-stage polycondensation,
**characterised in that** the esterification or transesterification takes place in the presence of the catalyst according to Claim 1 in a quantity corresponding to 0 - 1000 ppm titanium, related to dicarboxylic acid, and polycondensation takes place in the presence of the catalyst according to Claim 1 in a total quantity corresponding to 20 - 1000 ppm titanium, related to dicarboxylic acid,
and **in that** a phosphorous-oxygen compound in a quantity corresponding to 10 - 200 ppm phosphorous, related to dicarboxylic acid, is added directly before, during or after polycondensation.

7. A process according to Claim 6,
**characterised in that** the catalyst according to Claim 1 is added exclusively before or at the start of esterification or transesterification.

8. A process according to Claim 6,
**characterised in that** the catalyst according to Claim 1 is added before or at the start of the esterification or transesterification, whereby a further amount of catalyst of 10 - 250 ppm titanium, related to dicarboxylic acid, is added directly before or at the start of polycondensation.

9. A process according to Claim 6,
**characterised in that** the catalyst according to Claim 1 is exclusively added directly before or at the start of polycondensation.

10. A process according to Claim 7 or 8,
**characterised in that** esterification or transesterification takes place in the presence of a quantity of catalyst corresponding to 20 - 300 ppm titanium in accordance with Claim 1, in relation to dicarboxylic acid.

11. A process according to one of Claims 6 to 10,
**characterised in that** the catalyst according to Claim 1 is added to the polyester manufacturing process as a powder or as a suspension in the diol forming the basis of the polyester.

## Revendications

1. Catalyseur contenant du titane destiné à la préparation de polyesters, **caractérisé en ce qu'**il est constitué d'un TiO₂ finement dispersé, de surface élevée, obtenu par hydrolyse de sulfate de titanyle, hydraté de la composition
y TiO₂ • z H₂O
dans laquelle
y = 1
z = 0,01-2
ou d'un titanate finement dispersé, de surface élevée de la composition
(MeₙO)ₓ • (TiO₂)_{y} • (H₂O)ₓ
dans laquelle Me = Li, Na, K, Rb, Cs, Mg, Ca, Sr ou Ba
n = 1 pour Me = composé alcalino-terreux et
n = 2 pour Me = alcali
x = 0,0001 à 6
y = 1
z = 0,01 à 2
et "de surface élevée" indiquant une taille de cristallite ≤ 100 mm. et une surface spécifique > 10 m²/g,
et "finement dispersé" une taille de particule/agrégat < 10 µm.

2. Catalyseur selon la revendication 1, **caractérisé en ce que** la taille de cristallite < 10 nm, la surface spécifique > 100 m²/g et la taille de particule/agrégat ≤ 1 µm.

3. Catalyseur selon la revendication 1 ou 2, **caractérisé en ce que** la taille de cristallite est inférieure à la limite de détection de diffraction aux rayons X.

4. Catalyseur selon l'une quelconque des revendications 1 à 3, **caractérisé en ce qu'**il est obtenu par hydrolyse de sulfate de titanyle et par élimination facultative d'acide en excès par neutralisation et/ou lavage ou par traitement avec un hydroxyde alcalin ou alcalino-terreux à température ambiante jusqu'à température d'ébullition et par lavage, éventuellement par réaction partielle avec un acide minéral ou un acide carboxylique et par lavage renouvelé et éventuellement par séchage.

5. Catalyseur selon la revendication 4, **caractérisé en ce que** l'hydrolyse du sulfate de titanyle est une hydrolyse thermique exclusivement avec de l'eau.

6. Procédé pour la préparation de polyesters ou de copolyesters par estérification d'au moins un diol avec au moins un acide dicarboxylique ou par trans-estérification d'au moins un diol avec au moins un ester dialkylique d'acide dicarboxylique et par polycondensation subséquente en une ou plusieurs étapes, **caractérisé en ce que** l'estérification ou la trans-estérification est réalisée en présence du catalyseur selon la revendication 1 dans une quantité correspondant à 0-1 000 ppm de titane, rapportées à l'acide dicarboxylique, et la polycondensation est réalisée en présence du catalyseur selon la revendication 1 dans une quantité totale correspondant à 20-1000 ppm de titane, rapportées à l'acide dicarboxylique, et **en ce que** l'on ajoute immédiatement avant, pendant ou après la polycondensation un composé de phosphore-oxygène dans une quantité correspondant à 10-200 ppm de phosphore, rapportées à l'acide dicarboxylique.

7. Procédé selon la revendication 6, **caractérisé en ce que** l'on ajoute le catalyseur selon la revendication 1 exclusivement avant ou au départ de l'estérification ou de la trans-estérification.

8. Procédé selon la revendication 6, **caractérisé en ce que** l'on ajoute le catalyseur selon la revendication 1 avant ou au départ de l'estérification ou de la trans-estérification, une quantité supplémentaire de catalyseur de 10-250 ppm de titane, rapportées à l'acide dicarboxylique, étant directement ajoutée avant ou au départ de la polycondensation.

9. Procédé selon la revendication 6, **caractérisé en ce que** le catalyseur selon la revendication 1 est exclusivement ajouté immédiatement avant ou au départ de la polycondensation.

10. Procédé selon la revendication 7 ou 8, **caractérisé en ce que** l'estérification ou la trans-estérification est réalisée en présence d'une quantité du catalyseur selon la revendication 1 correspondant à 20-300 ppm de titane, rapportées à l'acide dicarboxylique.

11. Procédé selon l'une quelconque des revendications 6 à 10, **caractérisé en ce que** le catalyseur selon la revendication 1 est ajouté dans le procédé de préparation de polyester comme poudre ou comme suspension dans le diol étant à la base du polyester.
